(19) Europäisches Patentamt
European Patent Office
Office européen des brevets

(11) **EP 1 895 806 B1**

(12) **EUROPÄISCHE PATENTSCHRIFT**

(45) Veröffentlichungstag und Bekanntmachung des Hinweises auf die Patenterteilung:
**28.09.2016 Patentblatt 2016/39**

(51) Int Cl.:
*H04W 72/04* (2009.01)     *H04W 16/12* (2009.01)
*H04W 28/26* (2009.01)     *H04W 72/08* (2009.01)

(21) Anmeldenummer: **07115312.6**

(22) Anmeldetag: **30.08.2007**

(54) **RESSOURCENAUFTEILUNG IN DRAHTLOSEN KOMMUNIKATIONSSYSTEMEN**

Resource distribution in wireless communication systems

Répartition des ressources dans des systèmes de communication sans fil

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **30.08.2006 DE 102006040530**

(43) Veröffentlichungstag der Anmeldung:
**05.03.2008 Patentblatt 2008/10**

(60) Teilanmeldung:
**10181808.6 / 2 278 843**

(73) Patentinhaber: **Vodafone Holding GmbH**
**40213 Düsseldorf (DE)**

(72) Erfinder:
• **Fettweis, Gerhard, Prof.**
**01326 Dresden (DE)**
• **Habendorf, Rene**
**01277 Dresden (DE)**
• **Zimmermann, Ernesto**
**01307 Dresden (DE)**

(74) Vertreter: **KNH Patentanwälte**
**Kahlhöfer Neumann Rößler Heine PartG mbB**
**Postfach 10 33 63**
**40024 Düsseldorf (DE)**

(56) Entgegenhaltungen:
US-A- 5 708 969     US-A1- 2006 014 542
US-A1- 2006 116 077

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**Technisches Gebiet**

Die Erfindung betrifft ein Verfahren zur Zuweisung von Übertragungsressourcen eines drahtlosen Kommunikationssystems, insbesondere eines Mobilfunknetzes mit wenigstens einer Basisstation zur Versorgung von Mobilfunkendgeräten, *mit folgenden Verfahrensschritten:*

*a) Ermitteln von Kenndaten zwischen einer Basisstation und mindestens zwei Mobilfunkendgeräten, die dieser Basisstation zugeordnet sind,*

*b) Aufteilung der Mobilfunkendgeräte mittels der ermittelten Kenndaten in eine erste Gruppe und wenigstens eine zweite Gruppe,*

*c) Zuweisen von Übertragungsressourcen in Abhängigkeit von der Gruppenzugehörigkeit, wobei Übertragungsressourcen der zweiten Gruppe orthogonal zu den Übertragungsressourcen der ersten Gruppe sind,*

*d) dadurch gekennzeichnet, dass*
die der ersten Gruppe (32) zugewiesenen Übertragungsressourcen orthogonal zueinander sind, und die der zweiten Gruppe (36) zugewiesenen Übertragungsressourcen nicht orthogonal zueinander sind.

Ferner betrifft die Erfindung eine Einrichtung zur Zuweisung von Übertragungsressourcen eines drahtlosen Kommunikationssystems, insbesondere eines Mobilfunknetzes mit Basisstationen und Mobilfunkendgeräten, wobei Trägerfrequenzen bzw. Frequenzbänder orthogonale Übertragungsressourcen enthalten, über welche die Übertragung von Daten erfolgt *mit*

*a) Mitteln zur Ermittlung von Kenndaten zwischen Mobilfunkendgeräten und einer den Mobilfunkendgeräten zugeordneten Basisstation,*

*b) Mitteln zum Zuordnen der Mobilfunkendgeräte mittels der ermittelten Kenndaten in eine erste Gruppe und wenigstens in eine zweite Gruppe,*

*c) einer Zuweisungseinheit,*

*- zum Zuweisen einer Übertragungsressource an ein Mobilfunkendgerät der zweiten Gruppen und*

*- zum Zuweisen einer Übertragungsressource an ein Mobilfunkendgerät der ersten Gruppe, wobei die Übertragungsressource für das Mobilfunkendgerät der ersten Gruppe zu der Übertragungsressource der zweiten Gruppe sind,*

*d) dadurch gekennzeichnet, dass*
die der ersten Gruppe (32) zugewiesenen Übertragungsressourcen orthogonal zueinander sind, und die der zweiten Gruppe (36) zugewiesenen Übertragungsressourcen nicht orthogonal zueinander sind.

**Stand der Technik**

Drahtlose Kommunikationssysteme, wie Mobilfunknetze, welche beispielsweise nach dem GSM- oder UMTS-Standard arbeiten, werden immer häufiger von Mobilfunkteilnehmern zur Übertragung von großen Datenmengen genutzt. Dazu müssen genügend Übertragungsressourcen von dem Mobilfunknetz bereitgestellt werden, damit die Mobilfunkendgeräte ausreichende Kapazitäten zum Übertragen der Daten erhalten. In Mobilfunknetzen der zweiten Generation, wie z.B. GSM, wurden bisher nur relativ geringe Anforderungen an die Datenrate gestellt. Hier konnten die so genannten Einträgerverfahren für die Übertragung eingesetzt werden, d.h. jeder Nutzer bekam eine eigene Trägerfrequenz mit entsprechenden Schutzintervallen, welche in der Fachterminologie auch als "guard bands" bekannt sind, zu anderen Nutzern.

Mit Erhöhung der spektralen Effizienz in Systemen der dritten Generationen, dem UMTS-Standard, und den Entwürfen der nachfolgenden Generationen, z.B. B3G, werden jedoch breitbandige und zunehmend auch Mehrträgerverfahren eingesetzt, bei denen alle Nutzer auf der gleichen Trägerfrequenz bzw. dem gleichen Frequenzband senden. Zu den Mehrträgerverfahren zählen insbesondere das CDMA und das OFDM-Verfahren. Durch orthogonale Spreizsequenzen, wie CDMA bzw. DS-CDMA oder orthogonale Modulationsverfahren, wie OFDM bzw. OFDMA werden Interferenzen zwischen den verschiedenen Nutzern weitestgehend unterdrückt.

CDMA ist ein Codemultiplexverfahren. Die Abkürzung CDMA steht für "Code Division Multiple Access". Beim CDMA-Verfahren werden die Daten bzw. Signale mehrerer Quellen oder Sender gleichzeitig auf derselben Frequenz übertragen. Um ein Datenbit zu übertragen, wird eine dem Sender zugewiesene Bitfolge, der sogenannte "Spreizcode" übertragen. Die Datenrate auf dem Übertragungskanal, auch als "chip rate" bezeichnet, ist somit ein Vielfaches der Datenrate des Quellensignals. Zur Übertragung des Bitwerts "1" wird der Spreizcode selbst, für den Bitwert "0" der inverse Spreizcode übertragen. Sind mehrere Sender gleichzeitig aktiv, entsteht hierdurch ein Signalgemisch.

Der Empfänger filtert das Signal eines bestimmten Senders aus dem Signalgemisch heraus, indem er die Korrelation zwischen dem ihm bekannten Codemuster des Senders und dem Signalgemisch berechnet. Die Korrelationsfunktion liefert den Wert "1" für das Datenbit "1" und "-1" für das Datenbit "0". Wenn der Sender gar nicht sendet, liefert die Korrelation den Wert "0".

Um eine gegenseitige Beeinflussung der Signale der unterschiedlichen Sender zu vermeiden, müssen Codemuster zugewiesen werden, die unabhängig voneinander sind. Man bezeichnet solche Codemuster dann als orthogonal. Ein Empfänger, der das Codemuster eines bestimmten Senders sucht, erfasst Sendesignale mit orthogonalem Codemuster als Rauschen auf dem Übertragungskanal.

Beim UMTS-Standard werden unterschiedlichen Sendern unterschiedlich lange Codemuster zugewiesen. Je länger der Code, desto so geringer ist die Nutzdatenrate. Es wird dann jedoch auch nur eine relativ geringe Sendeleistung benötigt.

OFDM ist die Abkürzung für "Orthogonal Frequency Division Multiplex". Anstelle der Spreizsequenzen des CDMA-Verfahrens, erfolgt die Datenübertragung durch geeignete Frequenzmodulation. Das OFDM-Verfahren ist ein Modulationsverfahren, das anstatt einer einzelnen Trägerfrequenz zu modulieren, eine große Zahl von Subträgern gleichzeitig moduliert.

Jeder einzelne Träger ist phasen- und (ab 2 Bit pro Symbol zusätzlich) amplitudenmoduliert und kann daher die Information von mehreren Bits pro Symbol tragen, typischerweise 2 bis 6 Bit. Dieses Modulationsverfahren nutzt alle drei freien Parameter Frequenz, Amplitude und Phase für die Übertragung der Information.

Die Symboldauer ist bei OFDM gegenüber Einträgerverfahren sehr viel länger, da die Daten gleichzeitig statt nacheinander übertragen werden. Das resultierende Hochfrequenzsignal liegt also um ein Tausendfaches länger stabil "in der Luft". Da nach dem Zeitgesetz der elektrischen Nachrichtentechnik Bandbreite und Übertragungszeit einer Nachricht austauschbar sind, kann wegen der längeren Symboldauer ein wesentlich enger begrenztes Frequenzband für jeden Subträger benutzt werden als bei Einträgerverfahren. In einem Funkkanal, der sonst von einem einzigen Einträgerverfahren benutzt wird, können mehrere tausend Subträger untergebracht werden.

Durch die orthogonalen Spreizsequenzen wie bei dem DS-CDMA (= Direct Sequence Code Division Multiple Access) oder dem orthogonalen Modulationsverfahren, wie OFDM werden Interferenzen zwischen den Nutzern weitestgehend unterdrückt. Diese Verfahren verlangen jedoch ein entsprechendes Systemdesign. Denn in stark frequenz- und/oder zeitselektiven Kanälen kann sonst die Orthogonalität verloren gehen. Die Übertragungen einiger Nutzer können somit die Übertragung aller anderen Nutzer beeinträchtigen. Im Allgemeinen wird daher das Übertragungssystem so ausgelegt, dass es auch unter schlechtesten Bedingungen funktioniert, wie im Folgenden am Beispiel eines OFDM-Systems erläutert wird:

Um Inter-Symbol-Interferenz (= ISI) zu vermeiden und um eine zyklische Faltung zu erreichen, die die Orthogonalität der Unterträger sicherstellt, wird in OFDM-Verfahren ein sogenanntes "Guard Interval" (= GI) genutzt. Häufig handelt es sich dabei um eine zyklische Erweiterung des Sendesignals (cyclic prefix). Die letzten L Signalsamples werden an den Anfang des OFDM-Symbols kopiert. Um in allen Fällen ISI zu vermeiden, muss die Dauer des guard intervals $T_{G1}$ die maximal mögliche Länge der Kanalimpulsantwort $\tau_{me}$ übersteigen. Bezogen auf die OFDM-Symboldauer $T_U$ ergibt sich dadurch ein Overhead $\varepsilon$ und bei gegebenem maximal erlaubten Overhead $\varepsilon_{max}$, lässt sich der maximal mögliche Unterträgerabstand $\Delta f$ wie folgt berechnen:

$$\varepsilon = \frac{T_{GI}}{T_U} \leq \varepsilon_{max} \Rightarrow \Delta f T_{GI} \leq \varepsilon_{max} \Rightarrow \Delta f \leq \frac{\varepsilon_{max}}{\tau_{me}}. \qquad (1)$$

Die Länge der relevanten Teile der Kanalimpulsantwort wird maßgeblich durch die Entfernung zwischen Mobilfunkendgerät und Basisstation, sowie den für die erfolgreiche Übertragung notwendigen SINR (= Signal Interference Noice Ratio) bestimmt. Gleichzeitig gibt es eine untere Schranke für den möglichen Unterträgerabstand, um eine Verringerung des SINR durch ISI (vgl. die maximale Dopplerspreizung $f_{D,max}$) zu vermeiden:

$$f_{D,\max} < 0.03\Delta f \Rightarrow \Delta f > 33\frac{v_{\max}}{c}f_c. \qquad (2)$$

Wie aus (2) ersichtlich wird, korrespondiert die maximale Dopplerspreizung $f_{D,max}$ zur Maximalgeschwindigkeit $v_{max}$ des Mobilfunkendgeräts. Die Trägerfrequenz des Übertragungssystems wird mit $f_c$ bezeichnet. Ähnliche untere Schranken ergeben sich durch Unzulänglichkeiten der Hochfrequenz HF, beispielsweise Phasenrauschen im Oszillator. Bei Trägerfrequenzen bis zu wenigen Gigahertz ist jedoch die Dopplerspreizung $f_{D,max}$ üblicherweise der limitierende Faktor. Dabei ergeben sich zwei Schranken für den Unterträgerabstand für ein System mit einer Trägerfrequenz von 900MHz.

Setzt man nun beide Schranken gleich, so ergibt sich ein Ausdruck für den minimal erforderlichen Overhead durch das guard interval GI bei gegebenen Übertragungsparametern $v_{max}$ und $\tau_{me}$:

$$\Delta f = 33\frac{v_{\max}}{c}f_c = \frac{\varepsilon}{\tau_{me}} \Rightarrow \varepsilon = 33\frac{v_{\max}}{c}f_c\tau_{me}, \qquad (3)$$

welche sich wie folgt als zugeschnittene Größengleichung darstellen lässt:

$$\varepsilon[\%] = 3\cdot 10^{-3}\cdot v_{\max}[km/h]\cdot f_c[GHz]\cdot \tau_{me}[\mu s]. \qquad (4)$$

Nachteil der bekannten Verfahren ist, dass sich in Mobilfunksystemen der dritten Generation und den nachfolgenden Entwürfen alle Nutzer die gleiche Trägerfrequenz, unabhängig von ihren Übertragungsparametern teilen. Ein entsprechendes Systemdesign stellt hierbei sicher, dass selbst im schlimmsten zu erwartenden Fall die gegenseitigen Störungen einen gewissen Schwellwert nicht übersteigen. Die Aufteilung der Übertragungsressourcen, wie Spreizcodes in CDMA bzw. Unterträger bei OFDM, erfolgt dann größtenteils auf Basis der angeforderten Datenrate, sowie der Qualität der Verbindung zwischen Mobilfunkendgerät und Basisstation. Dieser Ansatz erfordert jedoch im Allgemeinen die Auslegung entsprechend großer Schutzintervalle und bedingt somit eine geringere Systemeffizienz, wie zuvor beschrieben. Die Anzahl der Nutzer mit "schlechten" Übertragungsbedingungen, d.h. beispielsweise Mobilfunkendgeräte, die sich mit hoher Geschwindigkeit bewegen und/oder sich in einem großen Abstand zur Basisstation befinden, ist jedoch meistens sehr klein. Damit wird jedoch die spektrale Effizienz einer ganzen Funkzelle, welche von einer Basisstation versorgt wird, teilweise erheblich gesenkt, obwohl viele Nutzer eine sehr gute Verbindung zur Basisstation haben. Außerdem befinden sich nur einige wenige Mobilfunkendgeräte im Mobilfunknetz, die tatsächlich die großzügig dimensionierten Schutzintervalle auslasten.

*Die* US 2006/0014542 A1 *beschreibt ein ein drahtloses Kommunikationssystem mit einem implementierten OFDMA-System mit einem geteilten Frequenzwiederbenutzungsplan. Auf dieses Kommunikationssystem zugreifende Terminals werden in zwei Gruppen unterteilt. Die erste Gruppe besteht aus Terminals, bei denen bei einem Zugriff auf das OFDMA-System keine Weiterleitung erfolgt. Die zweite Gruppe besteht aus Terminals, bei denen hingegen wahrscheinlich eine Weiterleitung erfolgt. Dabei können Terminals die Zuordnung der Unterträgerfrequenzen festlegen und grundsätzlich die Kanalqualität bestimmen.*

Die US 5,708,969 A offenbart ein Verfahren zum Reduzieren von Störungen in einem zellularen System durch Aufteilen eines bestimmten Frequenzspektrums innerhalb eines Versorgungsgebiets. Das Frequenzspektrum wird dabei in ein erstes und mindestens ein zweites Spektrum inklusive des bestimmten Spektrums aufgeteilt und ein jeweiliger Leistungspegel wird zugewiesen. Die Zuweisung von Kommunikationseinheiten zu einem Spektrum und Leistungspegel basieren auf der Entfernung von der Basisstation (wie ermittelt durch Signalstärkemessungen). Der spektrale Inhalt von Spektren benachbarter Versorgungsgebiete wird so eingestellt, dass die Frequenzen nicht überlappen.

## Offenbarung der Erfindung

Aufgabe der Erfindung ist es daher, diese spektrale Effizienz in einem drahtlosen Kommunikationssystem weiter zu erhöhen.

Erfindungsgemäß wird die Aufgabe durch ein Verfahren zur Zuweisung von Übertragungsressourcen eines drahtlosen Kommunikationssystems der eingangs genannten Art mit den Verfahrensschnitten nach Anspruch 1 gelöst.

Weiterhin wird die Aufgabe durch eine Einrichtung zur Zuweisung von Übertragungsressourcen eines drahtlosen Kommunikationssystems der eingangs genannten Art mit den Merkmalen nach Anspruch 10 gelöst.

Das Verfahren so ausgestaltet ist, dass Übertragungsressourcen, die den Mobilfunkendgeräten der zweiten Gruppe zugeordnet werden, eine geringe oder keine Orthogonalität zueinander aufweisen. Die Mobilfunkendgeräte dieser zweiten Gruppe werden anhand ihrer Kenndaten so ausgewählt, dass sie sich untereinander nur wenig stören. Ihnen brauchen daher untereinander keine orthogonalen Übertragungsressourcen zugeordnet werden. Die Mobilfunkendgeräte der ersten Gruppe weisen hingegen bei ihren Übertragungsressourcen Störungen auf, die z.B. durch Geschwindigkeit und Entfernung zur Basisstation hervorgerufen sind. Daher sollten die Übertragungsressourcen der ersten Gruppe möglichst orthogonal zueinander vorgesehen sein, damit Störungen untereinander nicht ins Gewicht fallen.

Gemäß einer zweckmäßigen Ausgestaltung des erfindungsgemäßen Verfahrens werden die Parameter des Übertragungsverfahrens innerhalb einer Gruppe den Kenndaten bzw. Übertragungsparametern (z.B. Geschwindigkeit und/oder Entfernung zur Basisstation) der dieser Gruppe zugehörigen Endgeräte angepasst. Die anzupassenden Parameter des Übertragungsverfahrens innerhalb einer Gruppe können z.B. Unterträgerabstand eines OFDM/OFDMA Systems, Guardbänder, Guardintervalle, Trägerfrequenz, Rahmenstruktur (Einteilung in und Wahl von Synchronisations-, Pilot- und Datensequenzen) und/oder Kanalkodierung sein.

Eine weitere vorteilhafte Ausbildung des Verfahrens erhält man durch Verwendung eines Mehrträgerverfahrens mit orthogonalem Modulationsverfahren als Übertragungsressourcen. Hierfür eignet sich besonders ein orthogonales Modulationsverfahren, welches beispielsweise als OFDM- bzw. OFDMA-System, vorgesehen ist.

Gemäß einer weiteren Ausgestaltung des erfindungsgemäßen Verfahrens kann das Mehrträgerverfahren als Verfahren mit ortogonalen Spreizsequenzen, wie beispielsweise das DS-CDMA-System vorgesehen sein.

Weiterhin lässt sich das erfindungsgemäße Verfahren dadurch optimieren, dass die Kenndaten der Verbindung zwischen Mobilfunkendgerät und Basisstation zur Bestimmung der Verbindungsqualität über einen Pilotkanal und/oder aus den empfangenen Datensequenzen ermittelt werden. Dies kann im Downlink durch das jeweilige Mobilfunkendgerät und/oder im Uplink durch die jeweilige Basisstation realisiert werden. Dies ist eine Möglichkeit, um die Kenndaten mit bereits vorhandenen Mitteln auf einfachere Weise zu erfassen. Verfahren, die die Kenndaten nur aus den empfangenen Datensequenzen und ohne dedizierte Pilotsequenzen ermitteln, werden als blinde Schätzverfahren bezeichnet.

In einer bevorzugten Variante des erfindungsgemäßen Verfahrens werden die ermittelten Kenndaten über einen Signalisierungskanal mit spezifischen Informationen, insbesondere Identität, bezüglich des Mobilfunkendgeräts an die Basisstation übermittelt.

Vorzugsweise bestehen die ermittelten Kenndaten alternativ oder kombiniert aus den Geschwindigkeitsdaten oder den Entfernungsdaten zur Basisstation des jeweiligen Mobilfunkendgeräts.

Eine vorteilhafte Ausgestaltung der erfindungsgemäßen Einrichtung zur Zuweisung von Übertragungsressourcen eines drahtlosen Kommunikationssystems besteht darin, dass die Übertragungsressourcen, die eine hohe Orthogonalität zueinander aufweisen, als Frequenzbänder eines OFDM- bzw. OFDMA- Systems und/oder als Trägerfrequenz eines DS-CDMA-Systems ausgebildet sind.

Eine weitere zweckmäßige Ausgestaltung der erfindungsgemäßen Einrichtung zur Zuweisung von Übertragungsressourcen eines drahtlosen Kommunikationssystems besteht darin, dass Übertragungsressourcen, die eine geringe Orthogonalität zueinander aufweisen, als Unterträger eines OFDM bzw. OFDMA Systems und/oder als Spreizsequenzen eines DS-CDMA Systems ausgebildet sind.

Gemäß einer weiteren vorteilhaften Ausbildung der erfindungsgemäßen Einrichtung sind Erfassungsmittel zur Erfassung der Kenndaten der Verbindung zwischen Mobilfunkendgerät und Basisstation vorgesehen.

Weiterhin besteht eine bevorzugte Ausgestaltung der Erfindung darin, dass die Einrichtung über Mittel zum Übermitteln der Kenndaten über einen Signalisierungskanal mit spezifischen Informationen, insbesondere Identität, bezüglich des Mobilfunkendgeräts an die Basisstation verfügt.

Die vorliegende Erfindung betrifft ein Verfahren und eine Einrichtung zur Aufteilung der Nutzer auf Ressourcen in einem drahtlosen Kommunikationssystem, wobei unter der Zielstellung der möglichst effizienten Ausnutzung der vorhandenen Bandbreite die Nutzer so gruppiert und so auf orthogonale Ressourcen aufgeteilt werden, dass jeweils Nutzer mit ähnlichen Übertragungsparametern Teile der gleichen Ressource verwenden, wohingegen Nutzer mit unterschiedlichen Übertragungsparametern auf zueinander orthogonale Ressourcen aufgeteilt werden. Die höhere spektrale Effizienz des Gesamtsystems ergibt sich aus der Minimierung der Störungen zwischen den Nutzern bzw. aus der Aufhebung des Zwanges, das System auf den schlechtesten Fall auslegen zu müssen, um derartige Störungen vermeiden zu können.

Dabei werden Mobilfunkendgeräte anhand gleichartigen Signal-Rauschabstands der von ihnen gesandten Signale in einer Gruppe zusammengefasst. Die Übertragungsressourcen die den Mitgliedern einer Gruppe zugewiesen werden sind orthogonal zu den Übertragungsressourcen, die Mobilfunkendgeräten einer anderen Gruppe zugewiesen werden. Dies erlaubt Redundanzmechanismen, wie die Bestimmung eines Guard-Intervalls, in den verschiedenen Gruppen unterschiedlich zu behandeln und damit die spektrale Effizienz des Gesamtsystems zu erhöhen.

Ziel der Erfindung ist es, die spektrale Effizienz eines Mobilfunksystems durch geeignete Aufteilung von Nutzern auf orthogonale Ressourcen zu erhöhen. Dabei sollen zugleich die Störungen zwischen verschiedenen Nutzergruppen in der Zelle minimiert werden. Hierzu werden über die Nutzer vorliegende Informationen im Bezug auf die vorliegenden Ausbreitungsbedingungen für die Ressourcenzuweisung genutzt.

Nutzer, die hohe Datenraten anfordern, beeinflussen maßgeblich die mittlere spektrale Effizienz. Da die meisten dieser Nutzer, die mit ihren Mobilfunkendgeräten solche Datenraten anfordern erfahrungsgemäß unbeweglich sind oder sich nur mit geringer Geschwindigkeit bewegen, werden diese nun von allen anderen Nutzern getrennt. Sie können auf einer orthogonalen Ressource mit entsprechend angepassten Schutzintervallen operieren. Damit wird der Gesamt-Overhead für die Schutzintervalle minimiert.

Hierzu ermittelt das Mobilfunkendgerät im Downlink (DL) über einen Pilotkanal spezifische Kenndaten seiner Verbindung zur Basisstation, wie z.B. Verzögerungsspreizung, d.h. Entfernung zur Basisstation, sowie Dopplerspreizung, d.h. Geschwindigkeit des jeweiligen Mobilfunkendgeräts. Diese Informationen werden zusammen mit anderen relevanten Informationen, wie Identität der Mobilfunkendgeräte etc. beim Aufbau einer Verbindung über einen Signalisierungskanal an die Basisstation übertragen. Die Basisstation verfügt nun über geeignete Mittel, um die Nutzer nun so auf die vorhandenen Ressourcen zu verteilen, dass Nutzer, die z.B. durch ihre hohe Verzögerungs-/Dopplerspreizung potenziell viele Störungen erzeugen, zu Nutzern mit einer guten Verbindung zugeordnet werden. Die Nutzer mit einer guten Verbindung weisen wegen einer geringen Entfernung zur Basisstation ein hohes SINR auf und senden damit auf orthogonalen Ressourcen. Erst danach erfolgt die Zuweisung von feinen, granularen Ressourcen, d.h. Spreizcodes bei CDMA oder Unterträger bei OFDM, anhand der bisher üblichen Kriterien, wie z.B. angeforderte Datenrate, Signal-Rauschleistungsverhältnis gegenüber der Basisstation.

Der Vorteil, der sich gegenüber bekannten Verfahren ergibt ist, dass die mittlere spektrale Effizienz in der Zelle durch das erfindungsgemäße Verfahren gesteigert wird. Innerhalb der ersten Nutzergruppe haben nämlich nun alle Nutzer einen hohen S(I)NR, der nicht durch Nutzer der zweiten Gruppe beeinträchtigt wird. Die erste Nutzergruppe kann somit mit sehr hoher spektraler Effizienz bei geringem Overhead durch das Guard Interval senden. Die spektrale Effizienz wird durch die Gruppierung in der zweiten Nutzergruppe kaum weiter gesenkt. Die zweite Nutzergruppe sendet nämlich üblicherweise wegen ihrer hohen Geschwindigkeit bzw. ihrer großen Entfernung zur Basisstation bei einem geringen SINR. Daher wird dort mit weitaus niedrigerer Datenrate und spektraler Effizienz gesendet.

Die Erfindung nutzt Informationen, die zum Teil bereits heute an der Basisstation vorliegen: z.B. Entfernung zwischen Basisstation und Mobilfunkendgerät, sowie Geschwindigkeit des Nutzers. Die Entfernungs- bzw. Geschwindigkeits-Parameter lassen sich ggf. auch mit Hilfe eines GPS-Systems sehr einfach ermitteln. Hierzu muss lediglich ein GPS-Empfänger an dem Mobilfunkendgerät vorhanden sein.

Weitere Ausgestaltungen und Vorteile ergeben sich aus dem Gegenstand der Unteransprüche, sowie den Zeichnungen mit den dazugehörigen Beschreibungen.

**Kurze Beschreibung der Zeichnung**

Fig. 1     zeigt ein Mobilfunknetz, bei dem das erfindungsgemäße Verfahren angewandt wird.

Fig. 2     zeigt in einer Prinzipskizze schematisch den Ablauf eines erfindungsgemäßen Verfahrens.

**Bevorzugtes Ausführungsbeispiel**

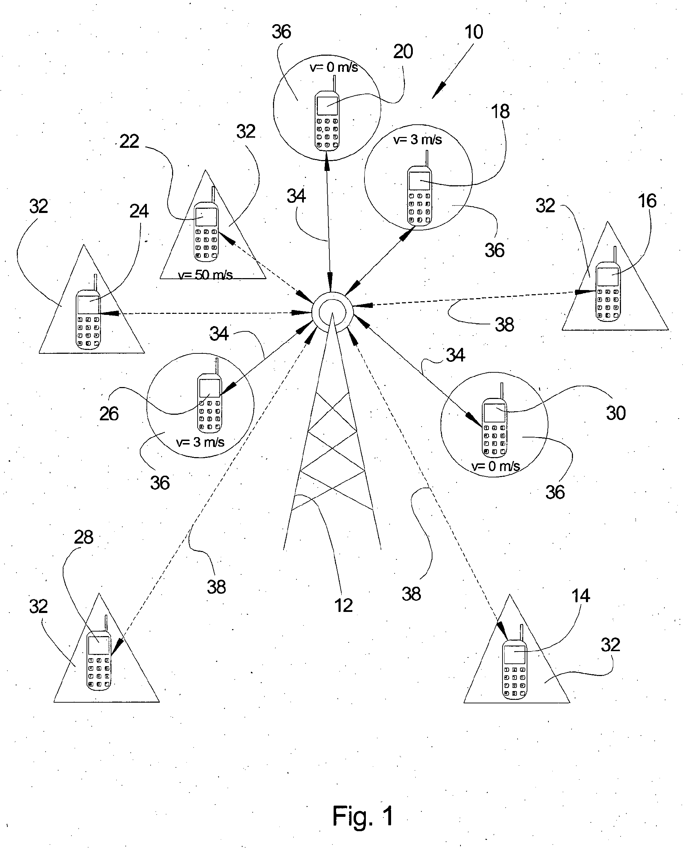

In Fig. 1 wird mit 10 ein Mobilfunknetz, beispielsweise nach dem UMTS-Standard, bezeichnet. Das Mobilfunknetz 10 verfügt wenigstens über eine Basisstation 12. Die Basisstation 12 ist symbolisch als Funkmast dargestellt. Der Versorgungsbereich der Basisstation 12 wird als Funkzelle bezeichnet. In der Funkzelle befinden sich beispielhaft mehrere Mobilfunkendgeräte 14, 16, 18, 20, 22, 24, 26, 28 und 30. Die Mobilfunkendgeräte 14, 16, 18, 20, 22, 24, 26, 28 und 30 verfügen über unterschiedliche Kenndaten. Die Kenndaten bilden sich beispielsweise aus der Entfernung der Mobilfunkendgeräte 14, 16, 18, 20, 22, 24, 26, 28 und 30 zur Basisstation 12 und/oder aus deren Geschwindigkeit "v".

Die Mobilfunkendgeräte 14, 16, 22, 24, und 28 werden einer ersten Gruppe 32 zugeordnet. Diese erste Gruppe 32 wird in der Figur 1 durch Dreiecke, die die Mobilfunkendgeräte 14, 16, 22, 24, und 28 zur Verdeutlichung umschließen, gekennzeichnet. Die Kenndaten der ersten Gruppe 32 sind relativ schlecht. Denn entweder befinden sich die Mobilfunkendgeräte 14, 28 und 16 weit weg von der Basisstation 12 oder die Mobilfunkendgeräte 22 bzw. 24 werden mit einer so großen Geschwindigkeit bewegt, so dass dies Einfluss auf die Verbindung zur Basisstation 12 hat. Die Verbindungen von der Basisstation 12 zu den zu Mobilfunkendgeräten 14, 16, 22, 24, und 28 werden als gestrichelte Pfeile 34 dargestellt.

Die Mobilfunkendgeräte 18, 20, 26 und 30 sind relativ statisch oder werden nur geringfügig ohne Einfluss auf die Verbindung zur Basisstation 12 bewegt. Ferner befinden sich die Mobilfunkendgeräte 18, 20, 26 und 30 relativ nahe der Basisstation 12. Diese Mobilfunkendgeräte 18, 20, 26 und 30 werden einer zweiten Gruppe 36 zugeordnet. Die zweite Gruppe 36 zeichnet sich in vorliegender Figur 1 durch Kreise aus. Die Verbindung der Mobilfunkendgeräte 18, 20, 26 und 30 zur Basisstation 12 wird durch Pfeile 38 dargestellt.

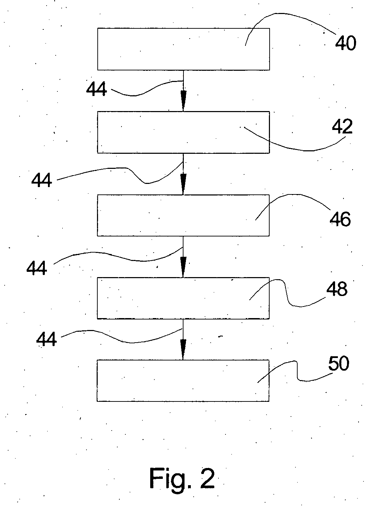

Während mit Fig. 1 der Sachverhalt dargelegt wird, soll anhand von Fig. 2 das erfindungsgemäße Verfahren prinzipiell erläutert werden. Dabei wird auf die Bezeichnung der vorherigen Figur Bezug genommen. Zunächst ermittelt jedes Mobilfunkendgerät 14, 16, 18, 20, 22, 24, 26, 28 und 30 seine spezifischen Kenndaten. Dies wird mit als Kasten dargestellter Verfahrensschritt 40 gezeigt. Die Mobilfunkendgeräte 14, 16, 18, 20, 22, 24, 26, 28 und 30 ermitteln die Kenndaten ihrer Verbindung 34 und 38 zur Basisstation 12 dazu über einen über einen Pilotkanal im Downlink. Diese Informationen bezüglich der Kenndaten werden zusammen mit anderen relevanten Informationen, wie der Identität des Mobilfunkendgeräts beim Aufbau der Verbindung über einen Signalisierung Skandal an die Basisstation 12 übertragen. Dieser Vorgang wird mit Kasten 42 in Figur 2 dargestellt.

Die Abfolge der Verfahrenschritte wird jeweils immer durch Pfeile 44 angedeutet. Die Basisstation 12 verfügt über Mittel die Kenndaten etc. auszuwerten und die Mobilfunkendgeräte 14, 16, 18, 20, 22, 24, 26, 28 und 30 entsprechend dieser Kendaten in die Gruppen 32 und 36 einzuteilen, Kasten 46.

Den Mobilfunkendgeräten 18, 20, 26 und 30 der ersten Gruppe 32 werden dabei Übertragungsressourcen, die zueinander im hohen Maße orthogonal sind, zugewiesen, Kasten 48. Den Mobilfunkgeräten 14, 16, 22, 24, und 28 der zweiten Gruppe 36 werden die übrigen Ressourcen, welche nur geringe bis keine Orthogonalität aufweisen, zugeordnet, Kasten 50. Es soll damit beim vorliegenden Verfahren erreicht werden, die Nutzer so um die vorhandenen Bandbreiten zu gruppieren, dass bei möglichst effizienter Ausnutzung der Bandbreite, die Nutzer auf orthogonale Ressourcen aufgeteilt werden. Nutzer mit ähnlichen Übertragungsparametern verwenden Teile der gleichen Ressource, wohingegen Nutzer mit unterschiedlichen Übertragungsparametern auf zueinander orthogonale Ressourcen aufgeteilt werden.

**Patentansprüche**

1. Verfahren zur Zuweisung von Übertragungsressourcen eines drahtlosen Kommunikationssystems, insbesondere eines Mobilfunknetzes (10) mit wenigstens einer Basisstation (12) zur Versorgung von Mobilfunkendgeräten (14, 16, 18, 20, 22, 24, 26, 28, 30), mit folgenden Verfahrensschritten:

   a) Ermitteln (40) von Kenndaten zwischen einer Basisstation (12) und mindestens zwei Mobilfunkendgeräten (14, 16, 18, 20, 22, 24, 26, 28, 30), die dieser Basisstation (12) zugeordnet sind,
   b) Aufteilung (46) der Mobilfunkendgeräte (14, 16, 18, 20, 22, 24, 26, 28, 30) mittels der ermittelten Kenndaten in eine erste Gruppe (32) und wenigstens eine zweite Gruppe (36),
   c) Zuweisen (48) von Übertragungsressourcen in Abhängigkeit von der Gruppenzugehörigkeit, wobei Übertragungsressourcen der zweiten Gruppe (36) orthogonal zu den Übertragungsressourcen der ersten Gruppe (32) sind,

   **dadurch gekennzeichnet, dass**
   die der ersten Gruppe (32) zugewiesenen Übertragungsressourcen orthogonal zueinander sind, und
   die der zweiten Gruppe (36) zugewiesenen Übertragungsressourcen nicht orthogonal zueinander sind.

2. Verfahren zur Zuweisung von Übertragungsressourcen eines drahtlosen Kommunikationssystems (10) nach Anspruch 1, **dadurch gekennzeichnet, dass** Signale der Mobilfunkendgeräte (14, 16, 22, 24, 2818, 20, 26, 30) der zweiten Gruppe (36) einen größeren Signal-Rauschabstand zueinander aufweisen, als die Mobilfunkendgeräte () der ersten Gruppe (32).

3. Verfahren zur Zuweisung von Übertragungsressourcen eines drahtlosen Kommunikationssystems (10) nach einem der Ansprüche 1 oder 2, **dadurch gekennzeichnet, dass** das Kommunikationssystem (10) OFDM- bzw. OFDMA-Modulationsverfahren und/oder DS-CDMA-Modulationsverfahren verwendet.

4. Verfahren zur Zuweisung von Übertragungsressourcen eines drahtlosen Kommunikationssystems (10) nach einem der Ansprüche 1 bis 3, **dadurch gekennzeichnet, dass** die Kenndaten der Verbindung zwischen Mobilfunkendgerät (14, 16, 18, 20, 22, 24, 26, 28, 30) und Basisstation (12) zur Bestimmung der Verbindungsqualität im Downlink durch das jeweilige Mobilfunkendgerät (14, 16, 18, 20, 22, 24, 26, 28, 30) und/oder in Uplink durch die jeweilige Basisstation (12) ermittelt werden.

5. Verfahren zur Zuweisung von Übertragungsressourcen eines drahtlosen Kommunikationssystems (10) nach einem der Ansprüche 1 bis 4, **dadurch gekennzeichnet, dass** die ermittelten Kenndaten über einen Signalisierungskanal mit spezifischen Informationen, insbesondere Identität, bezüglich des Mobilfunkgeräts (14, 16, 18, 20, 22, 24, 26, 28, 30), an die Basisstation (12) übermittelt (42) werden.

6. Verfahren zur Zuweisung von Übertragungsressourcen eines drahtlosen Kommunikationssystems (10) nach einem der Ansprüche 1 bis 5, **dadurch gekennzeichnet, dass** das die ermittelten Kenndaten alternativ oder kombiniert aus den Geschwindigkeitsdaten oder den Entfernungsdaten zur Basisstation (12) des jeweiligen Mobilfunkendgeräts (14, 16, 18, 20, 22,24, 26, 28, 30) bestehen.

7. Verfahren zur Zuweisung von Übertragungsressourcen eines drahtlosen Kommunikationssystems (10) nach einem der Ansprüche 1 bis 6, **dadurch gekennzeichnet, dass** die Parameter eines Übertragungsverfahrens innerhalb einer Gruppe (32, 36) an die jeweiligen Kenndaten dieser Gruppe (32, 36) angepasst werden.

8. Verfahren zur Zuweisung von Übertragungsressourcen eines drahtlosen Kommunikationssystems (10) nach einem der Ansprüche 1 bis 7, **dadurch gekennzeichnet, dass** die Signale von den Mobilfunkendgeräten (18, 20, 26, 30) der zweiten Gruppe (36) eine höhere spektrale Effizienz als die Signale der Mobilfunkendgeräte (14, 16 22, 24,28) der ersten Gruppe (32) aufweisen.

9. Verfahren zur Zuweisung von Übertragungsressourcen eines drahtlosen Kommunikationssystems (10) nach einem der Ansprüche 1 bis 7, **dadurch gekennzeichnet, dass** die Signale von den Mobilfunkendgeräten (18, 20, 26, 30) der zweiten Gruppe (36) mit einem geringeren Overhead als die Signale der Mobilfunkendgeräte (, 16 22, 24, 28) der ersten Gruppe (32) gesendet werden..

10. Einrichtung zur Zuweisung von Übertragungsressourcen eines drahtlosen Kommunikationssystems, insbesondere eines Mobilfunknetzes (10) mit Basisstationen (12) und Mobilfunkendgeräten (14, 16, 18, 20, 22, 24, 26, 28, 30), wobei Trägerfrequenzen bzw. Frequenzbänder orthogonale Übertragungsressourcen enthalten, über welche die Übertragung von Daten erfolgt, mit

   a) Mitteln zur Ermittlung von Kenndaten zwischen Mobilfunkendgeräten (14, 16, 18, 20, 22, 24, 26, 28, 30) und einer den Mobilfunkendgeräten (14, 16, 18, 20, 22, 24, 26, 28, 30) zugeordneten Basisstation (12),
   b) Mitteln zum Zuordnen der Mobilfunkendgeräte (14, 16, 18, 20, 22, 24, 26, 28, 30) mittels der ermittelten Kenndaten in eine erste Gruppe (32) und wenigstens in eine zweite Gruppe (36
   c) einer Zuweisungseinheit,

   - zum Zuweisen einer Übertragungsressource an ein Mobilfunkendgerät (18, 20, 26, 30) der zweiten Gruppen (36) und
   - zum Zuweisen je einer Übertragungsressourcen an je ein Mobilfunkendgerät (14, 16 22, 24, 28) der ersten Gruppe (32), wobei die Übertragungsressourcen der ersten Gruppe (32) orthogonal zu den Übertragungsressourcen der zweiten Gruppe (36) sind,

   **dadurch gekennzeichnet, dass**
   die der ersten Gruppe (32) zugewiesenen Übertragungsressourcen orthogonal zueinander sind und
   die der zweiten Gruppe zugewiesenen Übertragungsressourcen nicht orthogonal zueinander sind.

11. Einrichtung zur Zuweisung von Übertragungsressourcen eines drahtlosen Kommunikationssystems (10) nach Anspruch 10, **dadurch gekennzeichnet, dass** für das Kommunikationssystem (10) OFDM- bzw. OFDMA-Modulationsverfahren und/oder DS-CDMA-Modulationsverfahren vorgesehen sind.

12. Einrichtung zur Zuweisung von Übertragungsressourcen eines drahtlosen Kommunikationssystems nach einem der Ansprüche 10 bis 11, **gekennzeichnet durch** Erfassungsmittel zur Erfassung der Kenndaten der Verbindung zwischen Mobilfunkendgerät (14, 16, 18, 20, 22, 24, 26,28, 30) und Basisstation (12).

13. Einrichtung zur Zuweisung von Übertragungsressourcen eines drahtlosen Kommunikationssystems nach einem der Ansprüche 10 bis 12, **gekennzeichnet durch** Mittel zum Übermitteln der Kenndaten über einen Signalisierungskanal mit spezifischen Informationen, insbesondere Identität, bezüglich des Mobilfunkendgeräts (14, 16, 18, 20, 22, 24, 26, 28, 30) an die Basisstation (12).

**Claims**

1. Method for allocating transmission resources of a wireless communication system, in particular of a mobile radio network (10) with at least one base station (12) for supply of mobile terminals (14, 16, 18, 20, 22, 24, 26, 28, 30), the method comprising the following steps:

a) Determining (40) of characteristic data between a base station (12) and at least two mobile terminals (14, 16, 18, 20, 22, 24, 26, 28, 30), which are assigned to this base station (12),
b) Dividing (46) the mobile terminals (14, 16, 18, 20, 22, 24, 26, 28, 30) by means of the determined characteristic data into a first group (32) and at least one second group (36),
c) Allocating (48) of transmission resources depending on the group affiliation, wherein transmission resources of the second group (36) are orthogonal to the transmission resources of the first group (32),

**characterized in that**
the transmission resources allocated to the first group (32) are orthogonal to each other, and
the transmission resources allocated to the second group (32) are not orthogonal to each other.

2.  Method for allocating transmission resources of a wireless communication system (10) according to claim 1, **characterized in that** signals of the mobile terminals (14, 16, 18, 20, 22, 24, 26, 28, 30) of the second group (36) have a larger signal-to-noise ratio to one another than the mobile terminals of the first group (32).

3.  Method for allocating transmission resources of a wireless communication system (10) according to one of the claims 1 or 2, **characterized in that** the communication system (10) applies OFDM or OFDMA modulation methods, respectively, and/or DS-CDMA modulation methods.

4.  Method for allocating transmission resources of a wireless communication system (10) according to one of the claims 1 to 3, **characterized in that** the characteristic data of the connection between mobile terminal (14, 16, 18, 20, 22, 24, 26, 28, 30) and base station (12) for determining the quality of the connection are determined by means of the respective mobile terminal (14, 16, 18, 20, 22, 24, 26, 28, 30) in the downlink and/or by means of the respective base station (12) in the uplink.

5.  Method for allocating transmission resources of a wireless communication system (10) according to one of the claims 1 to 4, **characterized in that** the determined characteristic data are transmitted to the base station (12) with specific information, in particular identity, concerning the mobile terminal (14, 16, 18, 20, 22, 24, 26, 28, 30) via a signal channel.

6.  Method for allocating transmission resources of a wireless communication system (10) according to one of the claims 1 to 5, **characterized in that** the determined characteristic data alternatively or in combination consist of the data of velocity or the data of distance to the base station (12) of the respective mobile terminal (14, 16, 18, 20, 22, 24, 26, 28, 30).

7.  Method for allocating transmission resources of a wireless communication system (10) according to one of the claims 1 to 6, **characterized in that** within a group (32, 36) the parameters of a transmission method are adapted to the respective characteristic data of this group (32, 36).

8.  Method for allocating transmission resources of a wireless communication system (10) according to one of the claims 1 to 7, **characterized in that** the signals of the mobile terminals (18, 20, 26, 30) of the second group (36) have a higher spectral efficiency than the signals of the mobile terminals (14, 16, 22, 24, 28) of the first group (32).

9.  Method for allocating transmission resources of a wireless communication system (10) according to one of the claims 1 to 7, **characterized in that** the signals of the mobile terminals (18, 20, 26, 30) of the second group (36) are sent with a lower overhead than the signals of the mobile terminals (16, 22, 24, 28) of the first group (32).

10.  Arrangement for allocating transmission resources of a wireless communication system (10), in particular of a mobile radio network (10) with base stations (12) and mobile terminals (14, 16, 18, 20, 22, 24, 26, 28, 30), wherein carrier frequencies or frequency bands, respectively, contain orthogonal transmission resources, via which the transmission of data take place, with

a) means for determining characteristic data between mobile terminals (14, 16, 18, 20, 22, 24, 26, 28, 30) and a base station (12) assigned to the mobile terminals (14, 16, 18, 20, 22, 24, 26, 28, 30),
b) means for assigning the mobile radio terminal devices (14, 16, 18, 20, 22, 24, 26, 28, 30) by means of the determined characteristic data into a first group (32) and at least one second group (36),
c) an allocation unit,

- for allocating a transmission resource to a mobile terminal (18, 20, 26, 30) of the second group (36), and
- for allocating one transmission resource each to one mobile terminal (14, 16, 22, 24, 28) each of the first group (32), wherein the transmission resources of the first group (32) are orthogonal to the transmission resources of the second group (36),

**characterized in that**
the transmission resources allocated to the first group (32) are orthogonal to each other, and
the transmission resources allocated to the second group are not orthogonal to each other.

11. Arrangement for allocating transmission resources of a wireless communication system (10) according to claim 10, **characterized in that** OFDM or OFDMA modulation methods, respectively, and/or DS-CDMA modulation methods are provided for the communication system (10).

12. Arrangement for allocating transmission resources of a wireless communication system (10) according to claim 10 to 11, **characterized in** capturing means for capturing the characteristic data between mobile terminal (14, 16, 18, 20, 22, 24, 26, 28, 30) and base station (12).

13. Arrangement for allocating transmission resources of a wireless communication system (10) according to claim 10 to 12, **characterized in** means for transmitting the characteristic data to the base station (12) with specific information, in particular identity, concerning the mobile terminal (14, 16, 18, 20, 22, 24, 26, 28, 30) via a signal channel.


**Revendications**

1. Procédé de répartition de ressources de transmission d'un système de communication sans fil, notamment d'un réseau radio mobile (10) comportant au moins une station de base (12) pour alimenter des terminaux radio mobiles (14,16,18,20,22,24,26,28,30), comportant les étapes de procédé suivantes :

   a) déterminer (40) des données caractéristiques entre une station de base (12) et au moins deux terminaux radio mobiles (14,16,18,20,22,24,26,28,30), qui sont coordonnés à cette station de base (12),
   b) diviser (46) les terminaux radio mobiles(14,16,18,20,22,24,26,28,30) au moyen des données caractéristiques déterminées en un premier groupe (32) et au moins un deuxième groupe (36),
   c) répartir (48) des ressources de transmission en fonction de l'appartenance au groupe, les ressources de transmission du deuxième groupe (36) étant orthogonales aux ressources de transmission du premier groupe (32),

   **caractérisé en ce que**
   les ressources de transmission réparties au premier groupe (32) sont orthogonales les unes par rapport aux autres, et
   les ressources de transmission réparties au deuxième groupe (36) ne sont pas orthogonales les unes par rapport aux autres.

2. Procédé de répartition de ressources de transmission d'un système de communication sans fil (10) selon la revendication 1, **caractérisé en ce que** les signaux des terminaux radio mobiles (14,16,22,24,2818,20,26,30) du deuxième groupe (36) présentent un plus grand rapport signal sur bruit les uns par rapport aux autres que les terminaux radio mobiles du premier groupe (32).

3. Procédé de répartition de ressources de transmission d'un système de communication sans fil (10) selon l'une des revendications 1 ou 2, **caractérisé en ce que** le système de communication (10) utilise un procédé de modulation OFDM ou OFDMA et/ou le procédé de modulation DS-CDMA.

4. Procédé de répartition de ressources de transmission d'un système de communication sans fil (10) selon l'une des revendications 1 à 3, **caractérisé en ce que** les données caractéristiques de la liaison entre le terminal radio mobile (14,16,18,20,22,24,26,28,30) et la station de base (12) pour la détermination de la qualité de liaison sont déterminées dans la liaison descendante à travers le terminal radio mobile respectif (14,16,18,20,22,24,26,28,30) et/ou dans la liaison montante à travers la station de base respective (12).

5. Procédé de répartition de ressources de transmission d'un système de communication sans fil (10) selon l'une des revendications 1 à 4, **caractérisé en ce que** les données caractéristiques déterminées sont transmises (42) à la station de base (12) par l'intermédiaire d'un canal de signalisation avec des informations spécifiques, notamment une identité, par rapport au terminal mobile (14,16,18,20,22,24,26,28,30).

6. Procédé de répartition de ressources de transmission d'un système de communication sans fil (10) selon l'une des revendications 1 à 5, **caractérisé en ce que** les données caractéristiques déterminées sont constituées alternativement ou en combinaison des données de vitesse ou des données d'éloignement par rapport à la station de base (12) du terminal radio mobile respectif (14, 16, 18, 20, 22, 24, 26, 28, 30).

7. Procédé de répartition de ressources de transmission d'un système de communication sans fil (10) selon l'une des revendications 1 à 6, **caractérisé en ce que** les paramètres d'un procédé de transmission sont adaptés à l'intérieur d'un groupe (32,36) aux données caractéristiques respectives de ce groupe (32,36).

8. Procédé de répartition de ressources de transmission d'un système de communication sans fil (10) selon l'une des revendications 1 à 7, **caractérisé en ce que** les signaux des terminaux radio mobiles (18,20,26,30) du deuxième groupe (36) présentent une plus grande efficacité spectrale que les signaux des terminaux radio mobiles (14,16,22,24,28) du premier groupe (32).

9. Procédé de répartition de ressource de transmission d'un système de communication sans fil (10) selon l'une des revendications 1 à 7, **caractérisé en ce que** les signaux des terminaux radio mobiles (18,20,26,30) du deuxième groupe (36) sont envoyés avec un préfixe inférieur aux signaux des terminaux radio mobiles (, 16,22,24,28) du premier groupe (32).

10. Dispositif de répartition de ressources de transmission d'un système de communication sans fil, notamment d'un réseau radio mobile (10) comportant des stations de base (12) et des terminaux radio mobiles (14,16,18,20,22,24,26,28,30), dans lequel des fréquences porteuses ou des bandes de fréquences contiennent des ressources de transmission orthogonales par l'intermédiaire desquelles la transmission de données a lieu, comportant :

   a) des moyens pour déterminer des données caractéristiques entre les terminaux radio mobiles (14,16,18,20,22,24,26,28,30) et une station de base (12) associée aux terminaux radio mobiles (14, 16, 18, 20, 22, 24, 26, 28, 30),
   b) des moyens pour affecter les terminaux radio mobiles (14,16,18,20,22,24,26,28,30) au moyen des données caractéristiques déterminées dans un premier groupe (32) et au moins dans un deuxième groupe (36),
   c) une unité de répartition,

   - pour répartir une ressource de transmission à un terminal radio mobile (18,20,26,30) du deuxième groupe (36) et
   - pour répartir une ressource de transmission respective à un terminal radio mobile respectif (14,16,22,24,28) du premier groupe (32), dans lequel les ressources de transmission du premier groupe (32) sont orthogonales par rapport aux ressources de transmission du deuxième groupe (36),

   **caractérisé en ce que**
   les ressources de transmission réparties au premier groupe (32) sont orthogonales les unes par rapport aux autres et
   les ressources de transmission réparties au deuxième groupe ne sont pas orthogonales les unes par rapport aux autres.

11. Dispositif de répartition de ressources de transmission d'un système de communication sans fil (10) selon la revendication 10, **caractérisé en ce que** pour le système de communication (10) des procédés de modulation OFDM ou OFDMA et/ou un procédé de modulation DS-CDMA sont prévus.

12. Dispositif de répartition de ressources de transmission d'un système de communication sans fil selon l'une des revendications 10 à 11, **caractérisé par** un moyen de détection pour détecter les données caractéristiques de la liaison entre le terminal radio mobile (14,16,18,20,22,24,26,28,30) et la station de base (12).

13. Dispositif de répartition de ressources de transmission d'un système de communication sans fil selon l'une des revendications 10 à 12, **caractérisé par** un moyen pour transmettre les données caractéristiques par l'intermédiaire d'un canal de signalisation avec des informations spécifiques, notamment une identité, par rapport au terminal radio mobile (14,16,18,20,22,24,26,28,30) à la station de base (12).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060014542 A1
- US 5708969 A